# EUROPEAN PATENT APPLICATION

(11) **EP 4 613 884 A1**
(43) Date of publication of application: **10.09.2025**
(21) Application number: 23900361.9
(22) Date of filing: 06.11.2023
(51) Int. Cl.: C21B 5/00, C21B 7/00, C21B 7/24

(54) **BLAST-FURNACE OPERATING METHOD**

(30) Priority: 07.12.2022 JP 2022195560
(71) Applicant: JFE Steel Corporation, Tokyo 100-0011 (JP)
(72) Inventor: OKAMOTO, Yuki, Tokyo 100-0011 (JP); OHIRA, Yasuyoshi, Tokyo 100-0011 (JP); FUKUMOTO, Yasuhiro, Tokyo 100-0011 (JP); KIMIYA, Koji, Tokyo 100-0011 (JP); KAISE, Tatsuya, Tokyo 100-0011 (JP); WAKAI, Hajime, Tokyo 100-0011 (JP); YAMAMOTO, Tetsuya, Tokyo 100-0011 (JP)
(74) Representative: Hoffmann Eitle
(86) International application number: PCT/JP2023/039844
(87) International publication number: WO 2024/122239

(57) **Abstract**

Provided is a blast furnace operating method capable of smoothly starting up a blast furnace with a short shutdown period, thereby solving the problem with the conventional blast furnace banking technique where a long shutdown period of at least 5.5 months was required after shutting down the furnace. The method is a blast furnace operating method of restarting blasting after blast stoppage including reducing the height of a raw material charge layer surface that is immediately above tuyeres of a blast furnace to a height lower than an upper end of a bosh zone of the blast furnace and then stopping blasting, in which an oxygen-containing gas is blown from a tap hole into the blast furnace after stopping blasting of the blast furnace, thereby burning coke remaining between the tuyeres and the tap hole to reduce the volume of residues inside the blast furnace; coke is newly charged into a volume-reduced area thus formed; and blasting is restated by opening the tuyeres positioned above the tap hole.

## Description

### Technical Field

The present invention is to provide a blast furnace operating method that is related to a blast furnace start-up method performed at the time of blast furnace banking where blasting is restarted with contents being left in the furnace when conducting an empty blow-out operation of a blast furnace.

### Background Art

When blast furnaces are forced to significantly reduce production, there is a risk that low blast flow rates will lead to poor furnace conditions due to the deactivated furnace cores. Thus, a pig iron tapping ratio of lower than 1.5 means that operations have to be continued at a coke ratio greater than 400 kg/t, which is not economical because there will be an increase in consumption rate as coke is an expensive raw material. For example, while it is possible to repeatedly implement blast stoppage, an increase in coke ratio is inevitable due to the fact that coke ratio needs to be raised before and after blast stoppage. As described above, it is extremely difficult to economically secure the downside elasticity of blast furnace production. In this regard, there is a technique called "banking" that implements blast furnace shutdown for a long period of time to the extent that the molten pig iron and slag in the furnace solidifies.

When performing banking, the raw material level is first reduced to the tuyere level, and the coke and pig iron slag remaining in the furnace are cooled to room temperature (3 months). Next, heavy equipment is placed into the furnace so as to drag out the residual coke before laying coke and sleepers (2.5 months). Therefore, a shutdown period of at least 5.5 months is required.

One of the reasons why 5.5 months are required for preparing the start-up of a blast furnace after it has been shut down is because it is necessary to enter the furnace to remove the coke remaining therein, which makes it necessary to spend about 90 days cooling the inner side of the furnace as descried above, thus leading to a prolonged period from the blast furnace shutdown to the star-up thereof. Further, while heavy equipment is also utilized when entering the furnace after cooling, due to the fact that a safety net has to be installed as a safety condition, and that coke is to be removed throughout the entire circumference of the furnace, about 40 days are required to carry out the residual coke removal operation. For this reason, it may not be possible to keep up with a sudden recovery in demand.

Further, in the case of an incidental facility renewal of a blast furnace, even when the facility renewal is, for example, a renewal involving about 2 months of blast stoppage of the blast furnace, the shutdown period usually ends up being longer than necessary.

Furthermore, as a method of restarting operations by smoothly starting up a blast furnace that has undergone blast stoppage for a long period of time, there is, for example, a blast furnace operating method disclosed in Patent Literature 1. According to the blast furnace operating method disclosed in Patent Literature 1, the height of a raw material charge layer surface that is immediately above the tuyeres of a blast furnace is first reduced to a height lower than the upper end of the bosh zone of the blast furnace before stopping blasting. Next, oxygen or a mixed gas of oxygen and a combustible gas is blown into the furnace through a burner that has been inserted into the tap hole after the blasting of the blast furnace was stopped, thereby burning the coke remaining in the furnace to reduce the volume of the residues inside the furnace, followed by newly charging coke into a volume-reduced area before performing blasting from the tuyeres.

### Citation List

### Patent Literature

Patent Literature 1: Japanese Patent No.6947345

### Summary of Invention

### Technical Problem

However, with the blast furnace operating method disclosed in Patent Literature 1, there has been a problem that the preparation of the facilities used for blast furnace operations is troublesome as the use of a burner with a complex structure is inevitable, and the provision of a combustible gas supply line is necessary as well. Further, as a result of supplying a combustible gas, hydrogen will be generated when burning coke, which may cause the components of the exhaust gas to fall into the range of an explosive composition, thus causing a safety problem.

Further, the residual molten pig iron and slag solidifies if a blast furnace remains shut down for a long period of time. When the solidified molten pig iron and slag is heated upon starting up the blast furnace, the molten pig iron and slag will expand such that a tensile stress will be applied to the steel shell of the blast furnace. Thus, there has been a possibility that the steel shell may exhibit cracks and fracture thereby. For this reason, in order to smoothly start up a blast furnace that has been shut down for a long period of time, the tensile stress applied to the steel shell of the blast furnace needs to fall into an allowable range.

Moreover, as a general method for starting up a blast furnace after it has been shut down for a long period of time, tuyeres other than one to two positioned above the tap hole are first to be blocked by a refractory material or the like, whereby the amount of the molten pig iron and slag generated with blasting is restricted so as to establish a smooth discharging cycle with a small amount of molten substance to be discharged. The method exemplified is such that the tuyeres in the neighboring parts are later opened so that the number of the tuyeres opened is gradually increased to restore to normal operations. However, with this method, it cannot be told to what extent a tensile stress is being applied to the steel shell of the blast furnace when starting up the same. Thus, there has been a problem that if the timings for opening the tuyeres in the neighboring parts are too early, the molten pig iron and slag will exhibit a higher expansion rate, which will cause the steel shell of the blast furnace to fracture and thus make it impossible to start up the blast furnace smoothly.

It is an object of the present invention to provide a blast furnace operating method capable of smoothly starting up a blast furnace with a short shutdown period, thereby solving the problem with the conventional blast furnace banking technique where a long shutdown period of at least 5.5 months was required after shutting down the furnace.

### Solution to Problem

The blast furnace operating method of the present invention is a blast furnace operating method including reducing the height of a raw material charge layer surface that is immediately above tuyeres of a blast furnace to a height lower than an upper end of a bosh zone of the blast furnace to stop blasting and then restarting blasting, in which an oxygen-containing gas is blown into the blast furnace from a tap hole after stopping blasting of the blast furnace, thereby burning coke remaining between the tuyeres and the tap hole to reduce the volume of residues inside the blast furnace; coke is newly charged into a volume-reduced area thus formed; and blasting is restarted by opening the tuyeres positioned above the tap hole.

Further, in the case of the blast furnace operating method of the present invention which is configured in the above manner, it is considered that more preferable solutions can be brought when
(1) a strain gauge is provided on a steel shell at a furnace bottom of the blast furnace, and the number of tuyeres opened is increased while referencing measured values of the strain gauge.

### Advantageous Effects of Invention

According to the blast furnace operating method of the present invention, not only the shutdown period can be shortened to about 2 months even with a simplified facility when it was conventionally required to be at least 5.5 months, but a blast furnace can be started up safely and smoothly.

### Brief Description of Drawings

[Fig. 1] is a schematic view showing an embodiment of a blast furnace stock level lowering step of the blast furnace operating method of the present invention.
[Fig.2] is a schematic view showing an embodiment of an oxygen blowing step of the blast furnace operating method of the present invention.
[Fig.3] is a schematic view showing another embodiment of the oxygen blowing step of the blast furnace operating method of the present invention.
[Fig.4] is a drawing showing an embodiment of a coke charging step of the blast furnace operating method of the present invention.
[Fig.5] is a drawing showing an embodiment of a blasting starting step of the blast furnace operating method of the present invention.

### Description of Embodiments

Embodiments of the present invention are described in detail hereunder. Here, the following embodiments are each a set of examples of a device and/or method embodying the technical concept of the present invention and are not to limit the configuration of the present invention to those shown below. That is, various modifications can be made to the technical concept of the present invention within the technical scope described in the claims.

The blast furnace operating method of the present invention is characterized in that in a blast furnace operating method where blasting is restarted (blasting starting step) after reducing the height of a raw material charge layer surface that is immediately above the tuyeres of a blast furnace to a height lower than the upper end of the bosh zone (tuyere level) of the blast furnace and then stopping blasting (blast furnace stock level lowering step), an oxygen-containing gas is blown from the tap hole into the blast furnace after stopping the blasting of the blast furnace (oxygen blowing step) whereby the coke remaining between the tuyeres and the tap hole is burned to reduce the volume of the residues inside the furnace (coke volume reducing step), and coke is newly charged into a volume-reduced area thus formed (coke charging step), followed by opening the tuyeres positioned above the tap hole so as to start blasting (blasting starting step).

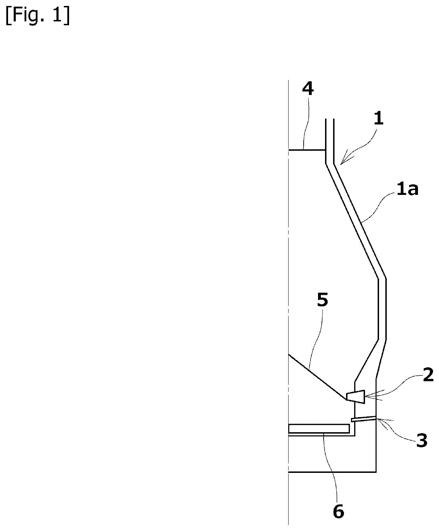

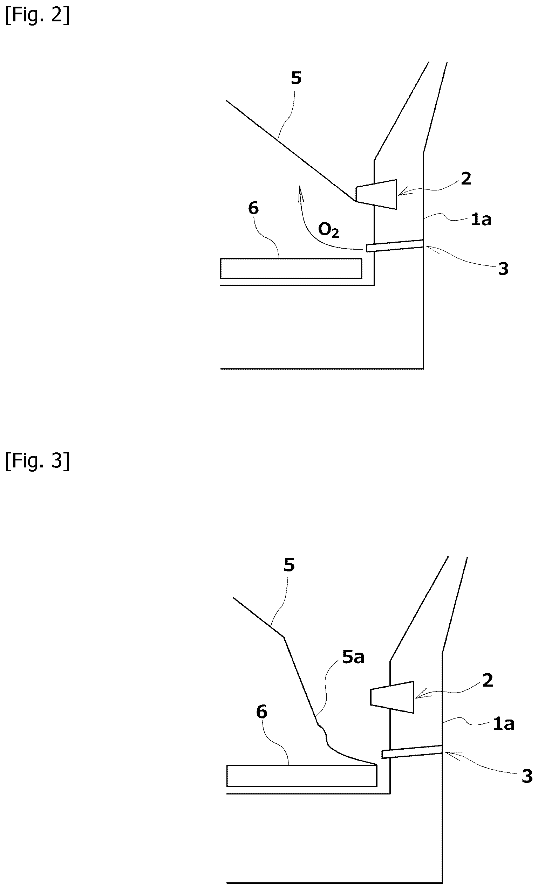

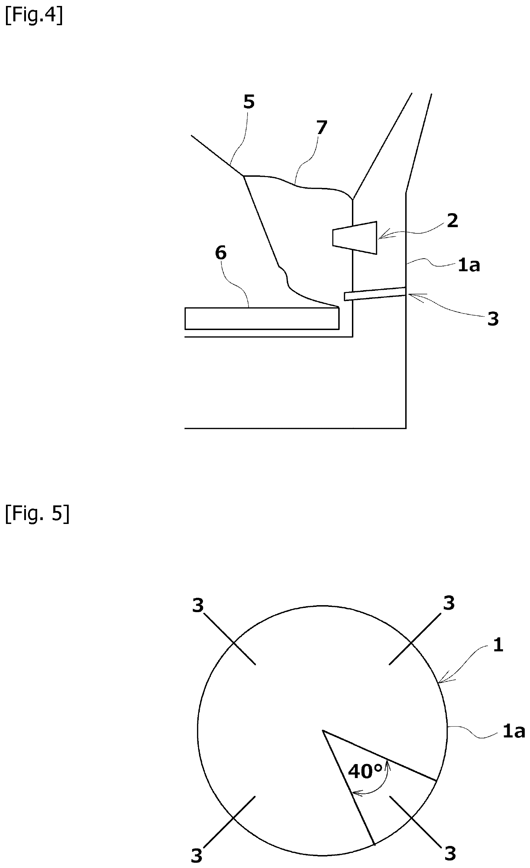

The blast furnace stock level lowering step (Fig. 1), oxygen blowing step (FIGs.2 and 3), coke charging step (Fig.4), and blasting starting step (Fig.5) of the blast furnace operating method of the present invention are described in order hereunder. Here, in FIGs. 1 to 5, 1 indicates a blast furnace, 1a indicates the steel shell of the blast furnace 1, 2 indicates a tuyere, 3 indicates a tap hole, 4 indicates a normal raw material level, 5 indicates a lowered raw material level, 5a indicates a volume-reduced area, 6 indicates molten pig iron and slag, and 7 indicates new coke.

### <Blast furnace stock level lowering step>

Fig.1 is a schematic view showing one embodiment of the blast furnace stock level lowering step in the blast furnace operating method of the present invention. As shown in Fig. 1, in the blast furnace stock level lowering step, the height of the raw material charge layer surface that is immediately above the tuyere 2 of the blast furnace 1 is lowered from the normal raw material level 4 to the lowered raw material level 5. Here, the lowered raw material level 5 refers to a position that is even lower than the height of the upper end of the bosh zone of the blast furnace, e.g., the position of the tuyere 2 (tuyere level).

In order to carry out the stock level lowering operation of the blast furnace, at first, coke is additionally charged, and the charging of the iron raw material is stopped. The level of the raw material charged is then gradually lowered while blowing a hot blast into the furnace from the tuyere 2. A hot blast feeding flow rate from the tuyere 2 is gradually reduced in accordance with a lowering status of the raw material. Stock level lowering proceeds as the charging of the iron raw material is stopped and the hot blast feeding flow rate is reduced. The rise in the temperature of a furnace top gas is reduced by being cooled with water sprinkling from a water sprinkling pipe provided at the furnace top. The level of the raw material charged is lowered to the tuyere level, water sprinkling is stopped, and the feeding of the hot blast from the tuyere 2 is halted such that blasting is stopped.

### <Oxygen blowing step>

Fig.2 is a schematic view showing one embodiment of the oxygen blowing step in the blast furnace operating method of the present invention; and Fig.3 is a schematic view showing another embodiment of the oxygen blowing step in the blast furnace operating method of the present invention. As shown in Fig.2, in the oxygen blowing step, the oxygen-containing gas is first blown from the tap hole 3 after the blasting of the blast furnace is stopped, thus burning the coke remaining between the tuyere 2 and the tap hole 3. Next, as shown in Fig.3, the volume of the residues inside the furnace is reduced to form the volume-reduced area 5a.

In blast furnace operations, if it is not possible to secure the gas permeability and liquid permeability between the tuyere and the tap hole, the molten pig iron and slag produced in the furnace will remain therein as they cannot be discharged outside the furnace from the tap hole. As a result, there may occur troubles such as blow-by troubles and tuyere breakage that are caused by a rise in pressure loss inside the furnace; and furnace cooling troubles where the molten pig iron and slag inside the blast furnace solidifies.

When a blast furnace is shut down for a long period of time, the void ratio between the tap hole and the tuyere may decrease as, for example, solidified molten pig iron and slag adheres to the gaps of the coke existing between the tap hole and the tuyere, and the coke is burned and turned into that of smaller particle sizes during the course of performing cooling in the furnace. For this reason, the oxygen-containing gas is injected to burn and consume the coke that exists between the tap hole and the tuyere.

As for the oxygen blowing step of the blast furnace operating method of the present invention, it was found that the coke existing between the tap hole and the tuyere can be burned and consumed by blowing the oxygen-containing gas from the tap hole directly via a lance pipe. Thus, the blasting of the blast furnace can be stopped in a stable manner by blowing the oxygen-containing gas with a lance pipe of a simple structure without having to blow the oxygen-containing gas with a burner of a complex structure that has a combustion function as is the case with the conventional technique. Here, since a lance pipe will reach a high temperature when used to burn and consume the coke existing between the tap hole and the tuyere, it is preferred that the lance pipe be one having a double pipe structure where oxygen is supplied from the inner pipe portion, and nitrogen is supplied to the outer pipe portion so as to cool the lance pipe.

### <Coke charging step>

Fig.4 is a drawing showing one embodiment of the coke charging step in the blast furnace operating method of the present invention. As shown in Fig.4, in the coke charging step, coke with no solidified matters adhering thereto is charged into the volume-reduced area 5a as a hollow region formed after burning and consuming the coke. Coke charging can, for example, be performed by the following method. At first, the new coke 7 is previously loaded into a flexible container. Next, a furnace top crane is used to suspend and move the flexible container filled with the new coke 7 to above the volume-reduced area 5a of the residues inside the furnace. In this way, after positioning the flexible container, the flexible container is then dropped into the volume-reduced area 5a. Thus, the new coke 7 is charged into the volume-reduced area 5a together with the flexible container. After charging the new coke 7 into the volume-reduced area 5a, an auxiliary raw material that is to be added for conducting component adjustment when the coke ash content has slagged, coke, and the iron raw material are charged into the furnace via a distributing chute such that the furnace is filled to the normal raw material level 4.

### <Blasting starting step>

Fig.5 is a drawing showing one embodiment of the blasting starting step in the blast furnace operating method of the present invention. At an orientation along the circumferential direction of the blast furnace where the tap hole 3 is not present, the coke remaining between the tap hole and the tuyere is not burned and consumed and is thus not replaced by the new coke 7 with no solidified matters adhering thereto. Therefore, as shown in Fig.5, in the blasting starting step, the tuyere 2 that is above the tap hole 3 through which the oxygen-containing gas has been blown is opened so as to start blasting from the tuyere 2. Here, the tuyere 2 does not necessarily have to be located immediately above the tap hole 3 through which the oxygen-containing gas has been blown; it will suffice so long as the tuyere 2 is arranged in an upper region of the tap hole 3 through which the oxygen-containing gas has been blown. Further, it does not necessarily have to be only one tuyere that is to be opened; multiple neighboring tuyeres in the upper region of the tap hole 3 may be opened. Thus, in a start-up operation after the blast furnace was shut down for a long period of time, a range of tuyeres to be opened is preferably a range of 30 to 50° (40° here) of the upper region of the tap hole 3 through which the oxygen-containing gas has been blown, as shown in Fig.5.

Next, after the blast furnace was started up by opening the tuyere 2 in the upper region of the tap hole 3, the range of tuyeres to be opened is gradually widened while making sure that the molten substance is able to be flawlessly discharged, and all the tuyeres are then opened to restart blasting.

In the blast furnace operating method of the present invention, as a preferable embodiment, it may also be that a strain gauge is provided on the steel shell 1a at the furnace bottom of the blast furnace 1, and the number of tuyeres opened is increased while referencing the measured values of the strain gauge. In the case of such preferable embodiment, for example, the tensile stress applied to the steel shell 1a at the furnace bottom of the blast furnace 1 can be monitored via the measured values of the strain gauge. Thus, there can be avoided fractures of the steel shell 1a of the blast furnace 1 that is caused by the expansion of the molten pig iron and slag as a result of heating. In this way, a smooth start-up of the blast furnace is made possible.

### Example

In a blast furnace with a capacity of 5,000 m³, after reducing the height of the raw material charge layer surface that is immediately above the tuyere of the blast furnace to the tuyere level and then stopping blasting, oxygen was supplied from the tap hole via the lance pipe in such a manner that the flow rate thereof was 400 to 900 Nm³/hr with the average flow rate being 600 Nm³/hr. Simultaneously, nitrogen for cooling the lance pipe was supplied from the tap hole via the lance pipe in such a manner that the flow rate thereof was 400 to 1,300 Nm³/hr with the average flow rate being 1,000 Nm³/hr, whereby the operation of burning the residual coke between the tuyere and the tap hole was carried out.

Coke was charged into a hollow space (volume-reduced area) formed, after the coke burning consumption operation was over. Next, blasting was started under a condition in which the tuyere(s) in the tap hole upper region where the tap hole and the tuyere are reliably communicated with each other were open, and the rest of the tuyeres remained closed. There, a strain gauge was attached to the steel shell at the furnace bottom of the blast furnace, and the number of tuyeres opened was increased so that the measured values of the strain gauge would fall into an allowable range. The following Table 1 shows a comparison between the conventional technique and the technique of the present invention in terms of the number of days for the shutdown period, and the number of days for a subsequent period required to restore to the normal operation state. Here, as the conventional technique, there was employed an example where after lowering the raw material line to the tuyere level, the coke and pig iron slag remaining in the furnace was cooled to normal temperature, and heavy equipment was placed into the furnace so as to drag out the residual coke before laying coke and sleepers.

**[Table 1]**

| Number of days before restoration | | Conventional technique | Invention technique |
|---|---|---|---|
| Shutdown period | In-furnace cooling period | 95 days | 0 day |
| | Removal of residual coke Blasting preparation | 70 days | 40 days |
| Blasting period | Number of days before all tuyeres were opened | 1 day | 21 days |
| | Total | 166 days | 61 days |

As is clear from the results shown in Table 1, with the technique of the present invention, although 20 days were required from the restart of blasting to the restoration of the normal operation state where all the tuyeres were opened as compared to the conventional technique, the total number of days required for restoration was able to be shortened by about 100 days. Further, the steel shell of the blast furnace exhibited no fractures, and the blast furnace was able to be started up smoothly.

### Reference Signs List

1 Blast furnace
1a Steel shell
2 Tuyere
3 Tap hole
4 Normal raw material level
5 Lowered raw material level
5a Volume-reduced area
6 Molten pig iron and slag
7 New coke

## Claims

1. A blast furnace operating method comprising reducing the height of a raw material charge layer surface that is immediately above tuyeres of a blast furnace to a height lower than an upper end of a bosh zone of the blast furnace to stop blasting and then restarting blasting,
**characterized in that**
an oxygen-containing gas is blown into the blast furnace from a tap hole after stopping blasting of the blast furnace, thereby burning coke remaining between the tuyeres and the tap hole to reduce the volume of residues inside the blast furnace;
coke is newly charged into a volume-reduced area thus formed; and
blasting is restarted by opening tuyeres positioned above the tap hole.

2. The blast furnace operating method according to claim 1, wherein a strain gauge is provided on a steel shell at a furnace bottom of the blast furnace, and the number of tuyeres opened is increased while referencing measured values of the strain gauge.
